# FASCICULE DE BREVET EUROPEEN

(11) **EP 4 625 065 B1**
(45) Date de publication et mention de la délivrance du brevet: **27.05.2026**
(21) Numéro de dépôt: 24165989.5
(22) Date de dépôt: 25.03.2024
(51) Int. Cl.: G04B 19/12, G04B 19/18, G04B 31/008, G04B 13/02, C04B 35/515

(54) **PROCÉDÉ DE FABRICATION D'UN ASSEMBLAGE HORLOGER ET ASSEMBLAGE HORLOGER**
VERFAHREN ZUR HERSTELLUNG EINER UHRENANORDNUNG UND UHRENANORDNUNG
METHOD FOR MANUFACTURING A TIMEPIECE ASSEMBLY AND TIMEPIECE ASSEMBLY

(43) Date de publication de la demande: 01.10.2025
(73) Titulaire: ROLEX SA, 1211 Genève 26 (CH)
(72) Inventeur: BIENVENU, Carine, 74370 Pringy (FR); MINCONE, Laurent, 74520 Jonzier Epagny (FR); SÉMOROZ, Alain, 1006 Lausanne (CH)
(74) Mandataire: Moinas & Savoye SARL

(56) Documents cités:
- EP-A1- 2 675 183
- JP-A- 2010 030 833
- JP-A- 2013 014 472
- JP-A- 2013 252 978

## Description

La présente invention concerne un assemblage horloger d'au moins deux composants horlogers. Elle porte aussi sur un mouvement horloger et sur une pièce d'horlogerie comprenant au moins un tel assemblage horloger. Elle porte aussi sur un procédé de fabrication d'un tel assemblage horloger.

La céramique est de plus en plus utilisée dans l'horlogerie, par exemple pour former des axes horlogers, car ses propriétés mécaniques intrinsèques, notamment de dureté, et son insensibilité aux champs magnétiques sont très avantageuses pour de nombreux composants horlogers. Il est aussi connu d'utiliser la céramique pour des composants d'habillage.

Les solutions traditionnelles d'assemblage de composants horlogers sont délicates lorsqu'au moins un des composants impliqués est en céramique. Certaines solutions profitent des propriétés d'un deuxième composant de l'assemblage lorsque ce dernier n'est pas en céramique. Ces solutions imposent ainsi des contraintes sur la fabrication du deuxième composant de l'assemblage. De plus, ces solutions ne sont pas toujours adaptées lorsqu'il s'agit par exemple d'assembler deux composants horlogers tous deux en céramique. Dans un tel cas, il est connu d'utiliser un collage, ce qui présente le premier inconvénient de devoir maitriser parfaitement le dosage de la colle, ainsi que l'alignement et le maintien des composants alignés lors de la prise et le séchage de la colle, et le deuxième inconvénient de dépendre de l'éventuelle dégradation dans le temps de la colle. En variante, il pourrait être tenté de solidariser les deux composants horlogers en céramique par chassage, ce qui est complexe car la force de chassage présente le risque de casser un composant. Le chassage n'est de plus pas adapté lorsqu'un composant en céramique présente une forme le rendant particulièrement fragile.

Les documents JP 2013 252978 A et JP 2013 014472 A divulguent l'assemblage de deux éléments céramiques.

Ainsi, la présente invention a pour objet d'améliorer la réalisation d'un assemblage horloger, et notamment de définir une solution d'assemblage horloger particulièrement adaptée à l'utilisation de la céramique, et particulièrement adaptée à un assemblage horloger impliquant l'assemblage de deux composants en céramique.

Plus précisément, l'invention a pour objet de définir une solution d'assemblage horloger fiable, durable, et facile à mettre en œuvre.

A cet effet, l'invention repose sur un procédé de fabrication d'un assemblage horloger comprenant un premier composant horloger, comprenant une portion de liaison comprenant au moins une ouverture, et au moins un deuxième composant horloger, distinct du premier composant horloger, comprenant au moins une conformation, au moins l'une de ladite portion de liaison du premier composant horloger et de la conformation du deuxième composant horloger formant une partie à base de zircone frittée, caractérisé en ce qu'il comprend une étape de traitement thermique de solidarisation, ledit traitement thermique étant prédéfini pour induire un changement de phase, de la phase tétragonale à la phase monoclinique, ou inversement, de ladite partie à base de zircone frittée, ce changement de phase induisant un changement de dimension d'au moins ladite partie à base de zircone frittée, de sorte à solidariser la portion de liaison du premier composant horloger et la conformation du deuxième composant horloger.

L'invention porte aussi sur un assemblage horloger, caractérisé en ce qu'il comprend un premier composant horloger, comprenant une portion de liaison à base de zircone en phase tétragonale comprenant au moins une ouverture et au moins un deuxième composant horloger distinct comprenant au moins une conformation ou en ce qu'il comprend un premier composant horloger, comprenant une portion de liaison comprenant au moins une ouverture et au moins un deuxième composant horloger distinct comprenant au moins une conformation à base de zircone en phase monoclinique, le premier composant horloger et le deuxième composant horloger étant fixés entre eux par un serrage sans déformation de l'ouverture du premier composant horloger sur la au moins une conformation du deuxième composant horloger.

L'invention est plus particulièrement définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente une vue de dessus d'une boite de montre comprenant une applique en céramique assemblée à un disque de lunette en céramique, selon un premier mode de réalisation de l'invention.
La figure 2 représente une vue partielle de côté en coupe du disque de lunette au niveau de l'assemblage horloger selon le premier mode de réalisation de l'invention.
La figure 3 représente une vue partielle de dessus du disque de lunette au niveau de l'assemblage horloger selon le premier mode de réalisation de l'invention.
La figure 4 représente une vue de dessus d'un disque de lunette comprenant une applique en céramique assemblée, selon un deuxième mode de réalisation de l'invention.
La figure 5 représente une vue partielle de côté en coupe du disque de lunette au niveau de l'assemblage horloger selon le deuxième mode de réalisation de l'invention.
La figure 6 représente une vue partielle de dessus du disque de lunette au niveau de l'assemblage horloger selon le deuxième mode de réalisation de l'invention.
La figure 7 représente une vue de dessus d'appliques assemblées au sein d'un cadran pour former un assemblage horloger selon un troisième mode de réalisation de l'invention.
La figure 8 représente une vue partielle de côté en coupe du cadran au niveau de l'assemblage horloger selon le troisième mode de réalisation de l'invention.
La figure 9 représente une vue de dessus d'un disque de lunette comprenant une applique en céramique assemblée, selon un quatrième mode de réalisation de l'invention.
La figure 10 représente une vue de dessus d'un assemblage d'une bague et d'un disque de lunette selon un cinquième mode de réalisation de l'invention.
La figure 11 représente une vue partielle de côté en coupe de l'assemblage horloger selon le cinquième mode de réalisation de l'invention.
La figure 12 représente une vue partielle de côté en coupe d'un assemblage horloger selon une variante du cinquième mode de réalisation de l'invention.
La figure 13 représente une vue en perspective d'un assemblage horloger comprenant un pignon assemblé à un arbre selon un sixième mode de réalisation de l'invention.
La figure 14 représente une vue de côté en coupe de l'assemblage horloger selon le sixième mode de réalisation de l'invention.
La figure 15 représente une vue de dessus de l'assemblage horloger selon le sixième mode de réalisation de l'invention.
La figure 16 représente une vue de côté en coupe d'un assemblage horloger comprenant un pignon assemblé à un arbre selon un septième mode de réalisation de l'invention.
La figure 17 représente une vue de côté en coupe d'un assemblage horloger selon un huitième mode de réalisation de l'invention.
La figure 18 illustre l'évolution de la déformation relative d'un échantillon en zircone noire en fonction de la température T pendant le traitement thermique préalable et le traitement thermique de solidarisation selon un mode de réalisation de l'invention.
La figure 19 représente l'évolution de la température en fonction du temps de l'échantillon en zircone noire pendant les mesures de la figure 18.

Pour simplifier la description, nous utiliserons par convention la direction verticale comme la direction perpendiculaire au plan d'une pièce d'horlogerie (au plan du cadran par exemple), c'est-à-dire la direction selon laquelle un utilisateur regarde la pièce d'horlogerie pour lire l'heure. L'adjectif « dessus » sera utilisé pour le positionnement relatif à la pièce d'horlogerie permettant de lire l'heure, selon la direction verticale, en opposition à l'adjectif « dessous ». Par extension, ces définitions seront utilisées pour un assemblage horloger formant un sous-ensemble d'une pièce d'horlogerie, même en dehors de leur positionnement au sein d'une pièce d'horlogerie, en faisant référence au positionnement prévu de cet assemblage horloger au sein d'une pièce d'horlogerie.

L'adjectif « transversal » sera utilisé pour désigner une direction perpendiculaire à la direction verticale. Une vue de côté désigne une vue selon la direction transversale.

L'invention porte avantageusement sur un procédé de fabrication d'un assemblage horloger. Un tel procédé a pour objectif d'assembler entre eux au moins deux composants horlogers distincts, de manière solidaire, fixe ou mobile l'un par rapport à l'autre, pour former un ensemble solidaire que nous appellerons assemblage horloger.

**Selon le concept** de l'invention, au moins l'un des composants horlogers de l'assemblage horloger se présente majoritairement en zircone frittée, c'est-à-dire qu'il se présente en tout ou partie en zircone frittée, et/ou comprend avantageusement au moins 50% en poids de zircone frittée. Nous utiliserons l'expression de composant horloger « à base de » zircone frittée, pour désigner le fait de comprendre au moins 50% en poids de zircone frittée. La zircone frittée peut donc être associée à un autre matériau, pour former ainsi un matériau composite. Le composant horloger sera de plus avantageusement intégralement à base de zircone frittée, ou intégralement en zircone frittée, c'est-à-dire que son matériau sera identique sur tout son volume. Nous utiliserons par la suite l'expression simplifiée de « composant horloger en zircone frittée » ou « portion de composant horloger en zircone frittée » pour désigner toutes les configurations mentionnées ci-dessus.

La zircone frittée utilisée est notamment présente au niveau d'une portion de liaison d'un composant horloger, c'est-à-dire une portion qui comprend une surface de liaison dudit composant horloger majoritairement en zircone frittée.

En complément, selon le concept de l'invention, la zircone frittée comprend une structure en phase tétragonale stabilisée de sorte à permettre un changement de phase de la phase tétragonale vers la phase monoclinique par un traitement thermique à pression ambiante et à une relativement basse température, notamment comprise entre 100°C et 400°C. Plusieurs facteurs interviennent pour atteindre cette propriété particulière d'aptitude au changement de phase susmentionné, et des exemples seront décrits par la suite de zircones qui atteignent cette propriété, ce qui est loin d'être le cas de toutes les zircones présentant une phase tétragonale. Nous utiliserons par la suite l'expression simplifiée de phase tétragonale particulière pour désigner une zircone en phase tétragonale dotée de cette propriété particulière, expliquée ci-dessus.

En remarque, il est possible d'observer une zircone et d'identifier la phase tétragonale, monoclinique, voire cubique de sa structure. Pour cela, une mesure par diffraction de rayons X permet par exemple une caractérisation directe de la structure, permettant même d'obtenir avec précision les concentrations de chaque phase tétragonale, monoclinique, et cubique, dans le cas d'une structure multiphases.

En remarque complémentaire, dans le cas d'une phase tétragonale qui se transforme en phase monoclinique, la zircone change de dimension en augmentant son volume. Ce phénomène, qui est exploité par l'invention, comme cela sera décrit plus bas, permet l'observation indirecte de la phase de la zircone à partir d'un dilatomètre. Cette observation du changement de dimension d'une zircone au cours du temps et/ou en fonction de la température permet de déterminer la présence d'un changement de phase de tétragonale à monoclinique et inversement, et même de déterminer la cinétique d'un tel changement de phase. Ainsi, lorsqu'on connait la phase et les dimensions initiales d'un échantillon, le dilatomètre permet indirectement de connaitre la phase avec précision à partir du changement de dimension.

En variante encore, la personne du métier pourra connaitre la phase de la zircone par tout autre moyen connu. Cette possibilité de détermination de la phase d'une zircone, ainsi que du changement de cette phase, permet empiriquement à la personne du métier d'analyser facilement une certaine zircone, et de déterminer par exemple si elle est apte à être utilisée pour former une portion de liaison d'un composant horloger ou pas, selon le procédé qui va être détaillé par la suite.

Enfin, dans tous les modes de réalisation envisagés, il est avantageux d'utiliser une zircone technique, et donc une zircone technique frittée. L'adjectif « technique » fait référence aux propriétés de haute performance des zircones choisies. En effet, les zircones techniques peuvent atteindre des propriétés mécaniques, thermiques, voire électriques, et/ou biochimiques, très élevées, ainsi qu'une inertie chimique et un amagnétisme, qui les rendent appropriées pour une utilisation afin de former un composant horloger. Les zircones techniques utilisées ici se caractérisent par leur phase cristalline stable, par exemple avec la domination de la phase tétragonale, et leur composition chimique qui les rend stables par rapport au changement de phase de tétragonale à monoclinique. Les poudres utilisées pour la fabrication des zircones techniques sont issues de poudres synthétiques purifiées et non pas de poudres minérales naturelles.

Un procédé de fabrication d'un assemblage horloger va maintenant être décrit.

Une étape préalable du procédé selon le mode de réalisation consiste à se munir d'au moins deux composants horlogers distincts, qu'on souhaite assembler pour former un ensemble solidaire.

Un premier composant horloger comprend au moins une première portion de liaison en zircone frittée ou à base de zircone frittée, en phase tétragonale particulière, comme définie précédemment. Cette première portion de liaison forme une connectique de type femelle, destinée à recevoir la liaison avec un deuxième composant horloger, qui sera décrit ci-dessous. Cette première portion de liaison présente ainsi globalement une forme d'ouverture, ou plus généralement comprend au moins une ouverture, le terme « ouverture » pouvant désigner une multitude de formes, dont des exemples précis seront mentionnés par la suite.

Un deuxième composant horloger comprend une forme adaptée à celle du premier composant horloger, et notamment une deuxième portion de liaison formant une connectique de type mâle, destinée à coopérer avec la première portion de liaison du premier composant horloger, c'est-à-dire ladite ouverture du premier composant horloger. Nous utiliserons le terme générique de « conformation » pour désigner la forme de cette deuxième portion de liaison destinée à coopérer avec l'ouverture du premier composant horloger. Cette conformation peut présenter une multitude de formes, dès lors qu'elle peut coopérer avec l'ouverture du premier composant horloger pour permettre la liaison entre les deux composants horlogers.

Le procédé de fabrication met en œuvre une première étape consistant à soumettre le premier composant horloger à un traitement thermique préalable de sorte à induire un premier changement de phase de la zircone frittée, au moins au niveau de la première portion de liaison, qui passe de sa phase tétragonale à une phase monoclinique. Ce premier changement de phase induit un agrandissement de l'ouverture du premier composant horloger. Cette modification des dimensions du premier composant horloger provient intrinsèquement du changement de phase. Le changement de phase peut être partiel mais sera choisi de sorte à atteindre l'agrandissement recherché.

Avantageusement, la phase tétragonale de la zircone frittée du premier composant horloger est particulière, choisie pour sa propension à changer de phase vers la phase monoclinique de manière relativement facile, c'est-à-dire par une température relativement basse, de préférence entre 100°C et 400°C, à pression ambiante. Le fait de prévoir une opération à pression ambiante, voire à une pression relativement faible, inférieure à 2 atm, et sans contrainte permet d'éviter de soumettre le composant horloger à une trop forte contrainte et simplifier le procédé, en utilisant des fours de construction simple sans complication due à la haute pression. C'est avantageux puisqu'un composant horloger se caractérise en général par une très petite dimension, et/ou par des portions très petites et de formes particulièrement fragiles. Ainsi, si un composant horloger était mis sous contrainte, il existerait un risque de casser le composant horloger et/ou de porter atteinte à son intégrité géométrique. De plus, il apparaît qu'un tel traitement thermique permet d'atteindre un résultat suffisant avec une durée relativement faible, par exemple d'une heure, voire de quelques heures. Plus généralement, la durée du traitement thermique peut être comprise entre 30 minutes et 10 heures. Dans tous les cas, le traitement thermique est avantageusement inférieur à 10 heures, voire inférieur à 5 heures, voire inférieur à 3 heures. Il est aussi possible de procéder à un tel traitement thermique dans une atmosphère neutre, ou dans l'air, et en tous cas sans besoin d'un apport extérieur supplémentaire, par exemple sans besoin d'un apport d'eau. Du fait des conditions mentionnées ci-dessus, le traitement thermique présente l'avantage de permettre l'utilisation d'un four simple pour sa mise en œuvre. En variante, un apport d'eau peut être mis en œuvre.

Le procédé de fabrication met ensuite en œuvre une deuxième étape consistant à assembler, notamment et avantageusement à la température ambiante, dans une configuration intermédiaire lesdits deux composants horlogers, de sorte que la conformation du deuxième composant horloger soit positionnée, au moins partiellement, au travers l'ouverture du premier composant horloger. Dans cette configuration intermédiaire d'assemblage des deux composants horlogers, les deux composants horlogers sont positionnés dans leur position relative finale l'un par rapport à l'autre, mais ne sont pas encore solidarisés entre eux. Ainsi, les dimensions respectives de l'ouverture, agrandie par le traitement thermique préalable, et de la conformation sont telles que la conformation est positionnée au sein de l'ouverture et séparée des surfaces de l'ouverture par une faible distance, qui représente un jeu entre les deux composants horlogers. A ce stade, les deux composants horlogers n'entrent donc pas ou peu en contact l'un avec l'autre, dans la configuration intermédiaire.

Avantageusement, un moyen est utilisé pour maintenir de manière stable cette configuration intermédiaire. Par exemple, l'un ou les deux composants horlogers peuvent être maintenus par un support, ou peuvent comprendre une forme complémentaire permettant leur maintien relatif. En variante, ce moyen peut se présenter sous une forme d'un liant intermédiaire qui partira au traitement thermique de solidarisation.

Le procédé de fabrication met ensuite en œuvre une troisième étape consistant à soumettre ledit assemblage horloger, dans sa configuration intermédiaire, à un traitement thermique de solidarisation, de sorte à induire un deuxième changement de phase de la zircone frittée du premier composant horloger, qui repasse partiellement ou totalement de la phase monoclinique à la phase tétragonale, ce qui induit un rétrécissement de l'ouverture du premier composant horloger, pour lier ainsi le premier et le deuxième composant horloger de l'assemblage horloger dans une configuration finale. Dans cette étape, la zircone frittée du premier composant retrouve sensiblement sa phase et ses dimensions initiales, telles qu'elles se présentaient avant la mise en œuvre du traitement thermique préalable.

Avantageusement, ce traitement thermique de solidarisation est de même réalisé à pression ambiante, voire à une pression relativement faible, inférieure à 2 atm. De plus, selon un mode de réalisation, il est réalisé à une température comprise entre 1100°C et 1300°C. De même, sa durée peut être comprise entre 1 heure et quelques heures, plus généralement entre 30 minutes et 10 heures. Avantageusement, ce traitement thermique de solidarisation présente une durée inférieure à 10 heures, voire inférieure à 5 heures, voire inférieure à 3 heures.

Cette liaison entre les deux composants horlogers peut consister en une fixation des deux composants horlogers entre eux, résultant du serrage de la surface de liaison délimitant l'ouverture du premier composant horloger sur la conformation du deuxième composant horloger, lors de la deuxième modification de dimension du premier composant horloger. En variante, cette liaison peut être un maintien du deuxième composant horloger au sein d'un logement formé par l'ouverture du premier composant horloger, les deux composants horlogers étant liés dans un assemblage horloger dans lequel le deuxième composant horloger conserve une mobilité relativement au premier composant horloger, notamment en translation et/ou en rotation.

En remarque, ce procédé de fabrication est compatible avec l'utilisation d'un deuxième composant qui peut se présenter en une multitude de matériaux différents, notamment au niveau de sa deuxième portion de liaison, qui comprend la conformation. Notamment, au moins la conformation du deuxième composant horloger peut être aussi en céramique.

En remarque, le matériau du deuxième composant horloger est choisi de sorte que son éventuelle déformation par dilatation thermique lors du traitement thermique de solidarisation ne limite pas la déformation mentionnée du premier composant horloger, pour ne pas s'opposer au concept de liaison, et donc d'assemblage, mis en œuvre par le changement de phase de la zircone du premier composant horloger. Notamment, l'éventuel changement dimensionnel par dilatation thermique de la conformation du deuxième composant horloger dans l'assemblage ne met pas sous contrainte le premier composant horloger hors de sa limite élastique pour éviter sa rupture.

Le concept de l'invention présente l'avantage de pouvoir être mis en œuvre avec une multitude de composants horlogers, pouvant présenter une multitude de matériaux et/ou de formes.

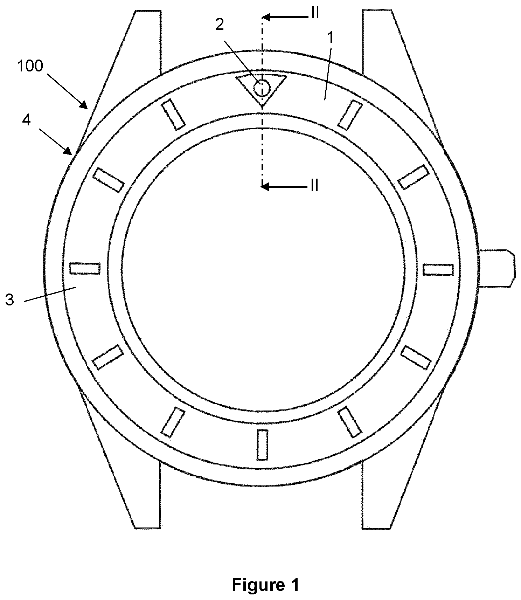

Les figures 1 à 17 représentent ainsi à titre d'exemples des assemblages horlogers obtenus par l'application du procédé de fabrication tel que décrit précédemment.

Sur ces figures, les mêmes références sont utilisées pour désigner le premier composant horloger et le deuxième composant horloger, ainsi que leurs portions de liaison correspondantes, pour une raison de simplicité, même si ces composants horlogers et leurs formes diffèrent.

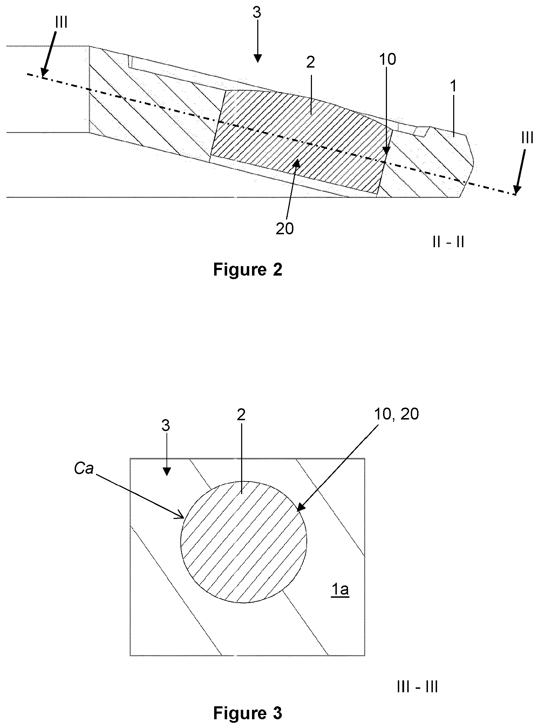

La figure 1 représente ainsi un premier mode de réalisation, dans lequel une boîte de montre 100 dotée d'une lunette 4, comprenant elle-même un disque de lunette assemblé, comprenant un disque de lunette sur lequel est fixée une applique cylindrique par le biais du procédé décrit ci-dessus. Selon ce premier mode de réalisation, l'assemblage horloger 3 est donc un disque de lunette assemblé, le premier composant horloger 1 est un disque de lunette, comprenant une ouverture 10 cylindrique formée au sein du disque de lunette, et le deuxième composant horloger 2 est une applique cylindrique, dont la conformation 20 est une portion cylindrique de l'applique, plus particulièrement visible sur les figures 2 et 3. Selon ce mode de réalisation, l'ouverture 10 et la conformation 20 présentent un diamètre de l'ordre de 2.2 mm. En variante, l'ouverture 10 et la conformation 20 pourraient présenter une autre forme et peuvent plus généralement s'inscrire au sein d'un cercle Ca présentant un diamètre de 2.2 mm une fois l'applique fixée sur le disque de lunette.

Selon ce mode de réalisation, le premier composant horloger 1, c'est-à-dire le disque de lunette, est en zircone noire, voire à base ou majoritairement en zircone noire. Cette zircone frittée est de plus particulière, apte à changer de phases selon le procédé décrit. Le deuxième composant horloger 2, c'est-à-dire l'applique, est quant à lui en zircone bleue, voire à base ou majoritairement en zircone bleue. Cette zircone bleue reste ici insensible au traitement thermique de solidarisation de la troisième étape.

La zircone noire est une zircone stabilisée en phase tétragonale à la température ambiante, grâce à l'ajout d'oxydes métalliques, par exemple de l'oxyde de cérium, et/ou calcium, et/ou magnésium et/ou yttrium. La couleur noire est obtenue par l'ajout de 1.5-5% par poids de spinelles du type (CoZn)(FeAl)₂O₄ à la composition de base comprenant de 1.8 à 5% mol d'oxydes métalliques, par exemple Y₂O₃, et du solde en ZrO₂, comme décrit par exemple dans le document EP1857428. Cette zircone noire est apte à passer partiellement ou totalement de la phase tétragonale à la phase monoclinique sous l'effet d'une température élevée. La durée de ce changement de phase peut être de l'ordre d'une heure voire de plusieurs jours en fonction des paramètres de température. Le phénomène peut par ailleurs être accéléré sous air humide.

La zircone bleue est une zircone stabilisée en phase tétragonale à la température ambiante grâce à l'ajout d'oxydes métalliques, typiquement de l'oxyde de cérium, et/ou calcium, et/ou magnésium et/ou yttrium. La couleur bleue est obtenue par l'ajout de particules de spinelle CoAl₂O₄ de 2 à 4% de la concentration par poids à la composition de base consistant de 3 à 5%mol d'oxydes métalliques, par exemple Y₂O₃, et du solde en ZrO₂.

Les caractéristiques des poudres pour préparer les zircones de ces composants horlogers sont présentées dans le Tableau 1 ci-dessous, et les caractéristiques des étapes d'élaboration de ces composants horlogers sont détaillées dans le Tableau 2.

**Tableau 1 - Types de zircones utilisées dans l'exemple de réalisation**

| **Couleur** | **Pigment** | **Concentration** |
|---|---|---|
| Noire | (CoZn)(FeAl)₂O₄ * | 3-5% wt |
| Bleue | CoAl₂O₄ ** | 2-4% wt |
| * Selon le document EP1857428 | | |
| ** Connu pour une personne du métier comme « cobalt blue », largement utilisé dans la coloration des céramiques | | |

**Tableau 2 - Procédé d'élaboration des disques de lunettes et appliques dans l'exemple de réalisation.**

| **Etape** | **Conditions** |
|---|---|
| Poudre | Poudres décrites dans le Tableau 1 |
| Mise en œuvre | Pressage uni-axial/injection |
| Usinage | |
| Déliantage | Four, 450 °C |
| Pré-frittage | Four, 750 °C |
| Frittage | Four, 1450 °C |

Les traitements thermiques ont été effectués dans un four à chauffage électrique non-hermétique sous air ambiant, de construction standard pour des céramiques techniques, permettant d'atteindre des températures de l'ordre de 1400°C à 1700°C.

Des disques de lunettes assemblés ont été réalisés dans le cadre d'essais. Notamment, des disques de lunette en zircone noire comportant chacun une ouverture de diamètre 2.186 mm prévue pour réceptionner une applique en zircone bleue ont été portés à 250°C pendant 2 heures, sous air ambiant, puis refroidis à la température ambiante. Le traitement thermique préalable de cette première étape provoque un agrandissement du diamètre des ouvertures de 0.01 mm.

Une applique de couleur bleue est placée dans chacune des ouvertures des disques, dans une configuration intermédiaire, puis ces assemblages horlogers en configuration intermédiaires sont portés à 1150°C pendant 1.5 h. Les disques en zircone noire reprennent leurs dimensions initiales, ce qui permet d'assurer le serrage des appliques.

Le tableau 3 ci-dessous résume le détail de ces différentes étapes pour un exemple de mise en œuvre :

**Tableau 3 Etapes de préparation de disques de lunette en zircone noire, avec mesures dimensionnelles pour deux disques, dans l'exemple de réalisation.**

| **Traitement thermique préalable - dilatation par le changement de phase de tétragonale à monoclinique** | |
|---|---|
| Chauffage de 40°C à 250°C à la vitesse de 300°C/h | |
| Maintien à 250°C pendant 2h | |
| Refroidissement de 250°C à 40°C à la vitesse de 200°C/h | |
| **Mesures** | |
| **Avant le traitement** | **Après le traitement** |
| ***Disque de lunette #1*** | |
| Diamètre interne Ø31.57 mm | Diamètre interne Ø31.73 mm |
| Ouverture #1 02.186 mm | Ouverture #1 Ø2.196 mm |

| ***Disque de lunette #2*** | |
|---|---|
| Diamètre interne Ø31.57 mm | Diamètre interne Ø31.77 mm |
| Ouverture #2 Ø2.186 mm | Ouverture #1 Ø2.196 mm |
| **Mise en place de la conformation** | |
| Diamètre de la conformation 2.191-2.194 mm | |
| **Traitement thermique de solidarisation - changement de phase de monoclinique à tétragonale** | |
| Chauffage de 40°C à 1150°C à la vitesse de 200°C/h | |
| Maintien à 1150°C pendant 1.5h | |
| Refroidissement de 1150°C à 40°C à la vitesse de 200°C/h | |

Selon le Tableau 3 ci-dessus, la déformation linéaire moyenne de disques en zircone noire due au changement de phase peut être estimée à 0.57% en prenant les mesures de diamètres internes.

Pour bien illustrer le changement de dimension exploité par l'invention, un dilatomètre est utilisé pour observer le comportement d'échantillons témoins en forme de parallélépipèdes rectangles avec une base carrée de 4.5 mm de côté et une longueur de 13 mm. Le principal résultat obtenu à l'aide du dilatomètre est la mesure d'une déformation linéaire relative d'un échantillon en fonction du temps et de la température.

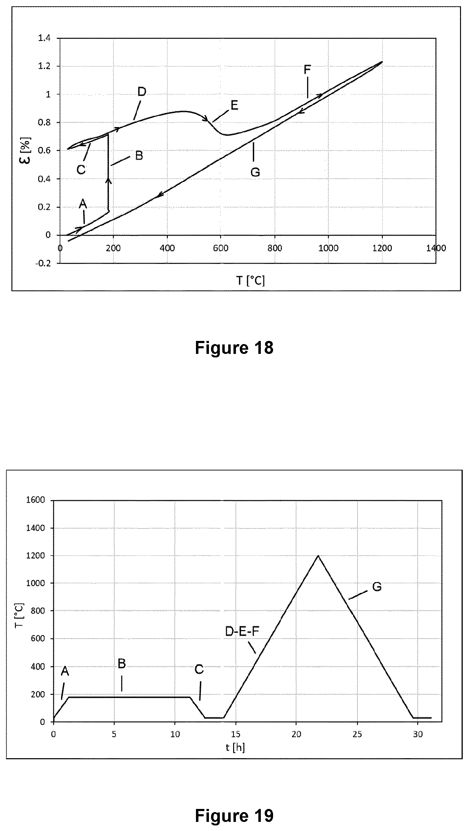

La figure 18 illustre l'évolution de déformation relative ε d'un échantillon en zircone noire en fonction de la température T mesurée par dilatomètre. Cette évolution est représentative de dilatation pendant le traitement thermique préalable et le traitement thermique de solidarisation dans le cadre de l'invention. Les flèches sur la courbe de dilation indiquent l'évolution dans le temps. La figure 19 représente l'évolution de la température de l'échantillon en zircone noire pendant les mesures de dilation présentées dans la figure 18. Dans la figure 18, les parties A, B, et C représentent le traitement thermique préalable. La partie A représente la montée linéaire de température de l'échantillon jusqu'à 180°C, accompagnée également de la dilation linéaire de l'échantillon, sans changement de phase. La partie B représente la déformation de 0.5% environ pendant le palier de 10h à la température constante de 180°C. Cela reflète la dilatation due à la transition de phase de tétragonale à monoclinique. La partie C représente le refroidissement à la température ambiante. La suite de la courbe, marquée en D, E et F, représente le traitement thermique de solidarisation qui restaure les dimensions initiales sous l'effet de transformation de phases de monoclinique à tétragonale pendant le chauffage à 1200°C. Dans la partie D, la dilatation de l'échantillon suit de manière linéaire la montée en température. Ensuite, dans la partie E, la dilatation diminue de manière non-linéaire en raison de la transformation de phases, et reprend de nouveau une croissance linéaire dans la partie F. La partie G montre le rétrécissement linéaire pendant la descente de la température. Il est à noter qu'en dehors des changements non-linéaires de déformation par les transformations de phases, la déformation reste linéaire par rapport à la température avec un coefficient de dilatation thermique normal d'une zircone.

Le changement de phase pendant le traitement thermique préalable a lieu dans une plage de température assez large pour les zircones étudiées, entre 100°C et 400°C environ, avec une cinétique maximale vers 180°C. Le changement de phase de monoclinique à tétragonale pendant le traitement thermique de solidarisation est déjà observable par une réduction de la dilatation (partie E) vers 600°C déjà, mais il a lieu de manière stable par rapport au refroidissement bien au-dessus de 800°C, typiquement vers 1200°C. En conséquence, si le traitement thermique de solidarisation est arrêté avant 800°C, la restauration par la transformation de phases a lieu de façon incomplète et l'échantillon sera significativement dilaté après le refroidissement à la température ambiante.

Le Tableau 4 ci-dessous illustre la proportion de phase monoclinique dans les zircones noire et bleue avant et après le traitement thermique de 10h à 180°C à air ambiant, évaluée par deux méthodes différentes. Il apparaît qu'il existe une légère différence entre la proportion de la phase monoclinique mesurée par un dilatomètre et celle obtenue à l'aide d'une mesure par diffraction des rayons-X. La valeur inférieure de cette dernière méthode pourrait être attribuée à la faible pénétration des rayons-X dans l'échantillon mesuré, de l'ordre de quelques micromètres.

**Tableau 4**

| | **Dilatomètre** | **Diffraction de rayons-X** |
|---|---|---|
| ***Avant le traitement thermique préalable*** | | |
| Zircone noire | 0* | 5%-6% |
| Zircone bleue | 0* | <1% |

| ***Après le traitement thermique préalable*** | | |
|---|---|---|
| Zircone noire | 35%-45% | 35%-40% |
| Zircone bleue | <1% | <1% |
| *Dans les cas des mesures avec le dilatomètre, qui mesure une variation de phase et pas une concentration de phase absolue, il est supposé que la proportion initiale de phase monoclinique avant les traitements thermiques est nulle. | | |

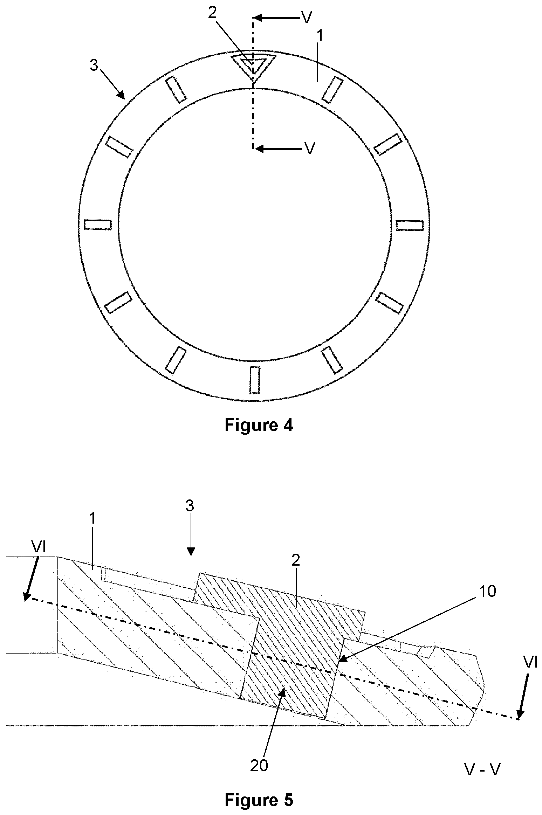

La figure 4 représente une vue de dessus d'un assemblage horloger selon un deuxième mode de réalisation. Cet assemblage horloger 3 comprend pour deuxième composant horloger 2 une applique en céramique, assemblée à un premier composant horloger 1 qui est un disque de lunette.

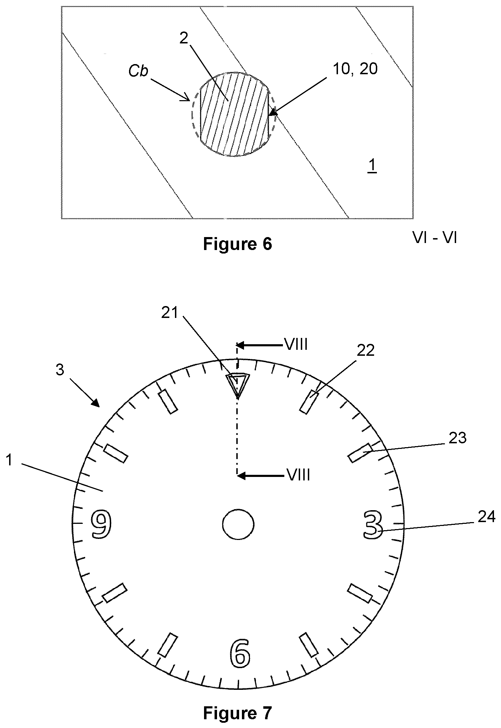

L'applique présente une partie visible de forme triangulaire, prolongée par une conformation 20 qui se présente sous la forme d'un pied inséré dans une ouverture 10 du disque de lunette. Dans ce deuxième mode de réalisation, l'ouverture 10 est de forme non cylindrique, formée d'un cylindre doté de méplats, et la conformation 20 de l'applique est de même un pied non-cylindrique de géométrie complémentaire à celle de l'ouverture 10, et donc doté de méplats, comme cela est particulièrement visible sur les figures 5 et 6. Cette géométrie non cylindrique remplit la fonction de bonne orientation de l'applique relativement au disque de lunette. Les sections transversales de l'ouverture 10 et la conformation 20 peuvent s'inscrire au sein d'un cercle Cb présentant un diamètre de 1 mm une fois l'applique fixée sur le disque, tel que représenté sur la figure 6.

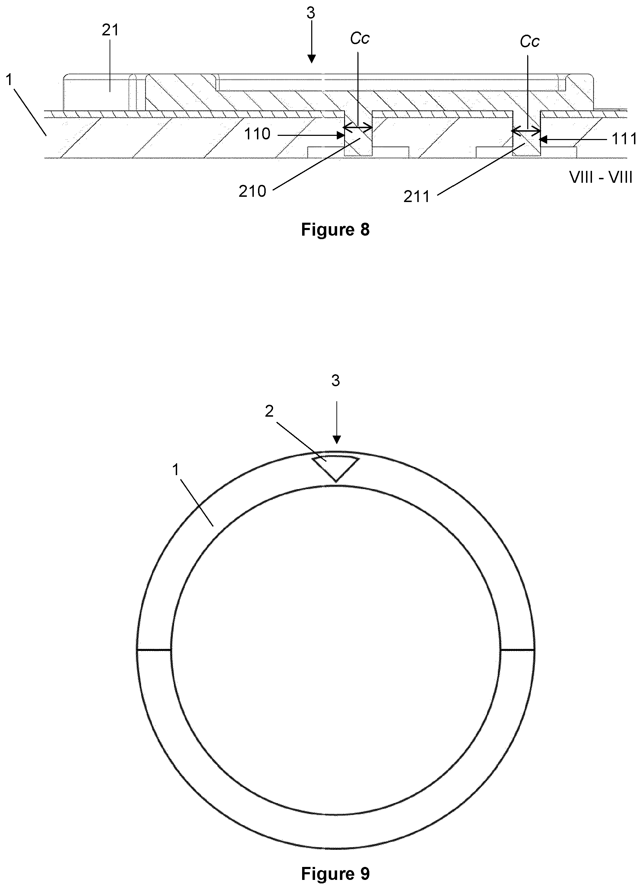

Les figures 7 et 8 représentent un assemblage horloger 3 sous forme d'un cadran, permettant l'assemblage d'un premier composant horloger 1 qui est une plaque de cadran, avec plusieurs deuxièmes composants horlogers 2, qui sont des appliques 21, 22, 23, 24. Ces appliques sont remarquables en ce qu'elles comprennent chacune deux conformations sous forme de pieds cylindriques prévus pour se loger dans deux ouvertures 10 respectives de la plaque du cadran afin de permettre leur indexation en regard de ladite plaque de cadran. À titre d'exemple, la figure 8 représente une vue de coupe passant par l'applique 21, disposée à 12h sur la plaque de cadran. Les deux pieds 210, 211 de l'applique 21 sont ici logés dans les ouvertures respectives 110, 111 de la plaque de cadran. Les ouvertures 110, 111 et les conformations 210, 211 présentent un diamètre de l'ordre de 0.25 mm. En particulier, les ouvertures 110, 111 et les conformations 210, 211 peuvent s'inscrire au sein d'un cercle Cc présentant un diamètre de 0.25 mm une fois l'applique 21 fixée sur la plaque de cadran.

La figure 9 représente un assemblage horloger 3 selon un quatrième mode de réalisation, doté d'un premier composant horloger 1 correspondant à un disque de lunette assemblé à un deuxième composant horloger 2 correspondant à une applique. Cette applique peut être assemblée au disque de lunette par une architecture de conformations/ouvertures semblable à celle de l'assemblage horloger 3 de la figure 8. Ce quatrième mode de réalisation correspond finalement à une combinaison du deuxième mode de réalisation représenté sur la figure 4 et du troisième mode de réalisation de la figure 7.

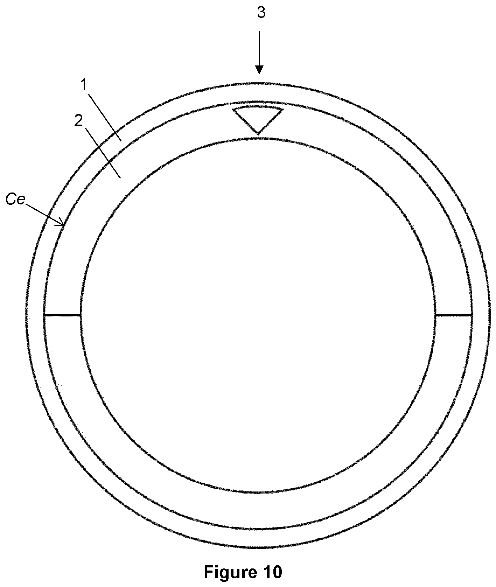

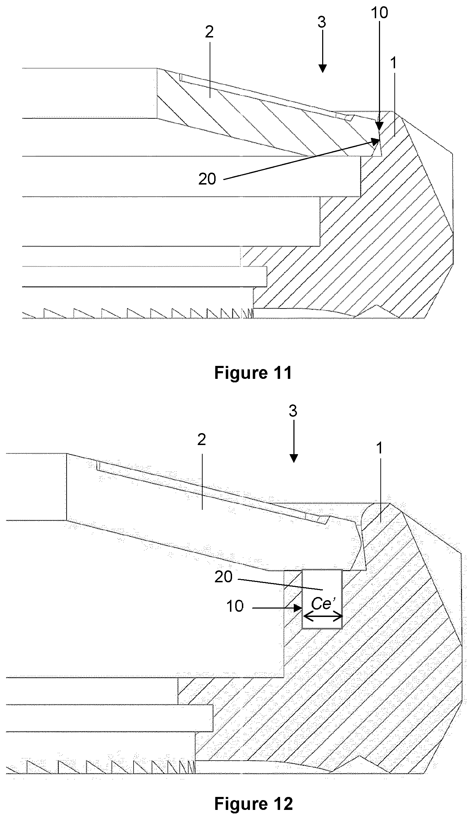

Les figures 10 et 11 représentent un assemblage horloger 3 selon un cinquième mode de réalisation. Le premier composant horloger 1 est une bague de lunette comprenant une ouverture 10 sous forme d'une rainure périphérique. Le deuxième composant horloger 2 est un disque de lunette, dont le pourtour forme une conformation 20, qui vient se loger dans l'ouverture 20, de sorte que la paroi de ladite ouverture 10 enserre le pourtour extérieur formant une conformation 20 du disque de lunette. Dans ce mode de réalisation spécifique, l'ouverture 10 et la conformation 20 présentent un diamètre global de l'ordre de 47 mm. En particulier, l'ouverture 10 et la conformation 20 peuvent s'inscrire au sein d'un cercle Ce, représenté sur la figure 10, présentant un diamètre de 47 mm une fois le disque de lunette enserré au sein de la bague de lunette.

La figure 12 illustre une variante du cinquième mode de réalisation, dans lequel la conformation 20 du disque de lunette comprend des pieds, qui sont prévus pour venir se loger dans des ouvertures 10 de la bague de lunette. À titre d'exemple, la figure 12 représente une vue en coupe transversale au niveau d'un pied logé au sein d'une ouverture de la bague de lunette. Dans ce mode de réalisation, les pieds sont orientés selon une direction verticale, et sont agencés au sein d'ouverture agencées de même autour d'un axe vertical. Les pieds sont répartis sur le pourtour du disque de lunette, de manière régulière ou pas. Les ouvertures sont réparties de manière correspondante sur la bague de lunette. L'homme de métier saura adapter la forme et les positions des ouvertures (et des pieds correspondants) en fonction des déformations linéaires différentes du diamètre interne de chaque ouverture ainsi que des distances entre ces dernières. A titre d'exemple, une ouverture 10 et une conformation 20 correspondante présentent un diamètre de l'ordre de 1 mm.

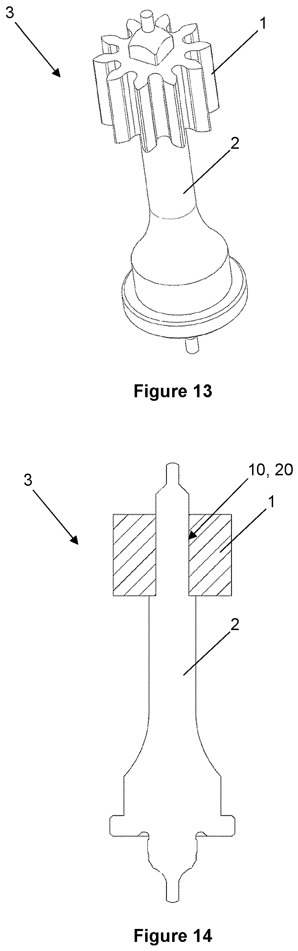

Les figures 13 à 15 illustrent un assemblage horloger selon un sixième mode de réalisation, qui est un pignon arbré, en particulier un pignon d'échappement. Le premier composant 1 horloger est un pignon, et le deuxième composant horloger 2 est un arbre. Le pignon comprend une ouverture 10 de section transversale de forme carrée, et l'arbre comprend une portion présentant une section complémentaire à celle de l'ouverture, formant une conformation, de sorte que l'assemblage horloger est un pignon monté à carré sur un arbre. Le carré permet d'une part d'indexer la position du pignon par rapport à l'arbre, et constitue aussi un élément de transmission de couple entre l'arbre et le pignon. Les géométries respectives des sections de l'ouverture 10 et de la conformation 20 peuvent s'inscrire au sein d'un cercle Cf présentant un diamètre de 0.3 mm une fois le pignon fixé sur l'arbre.

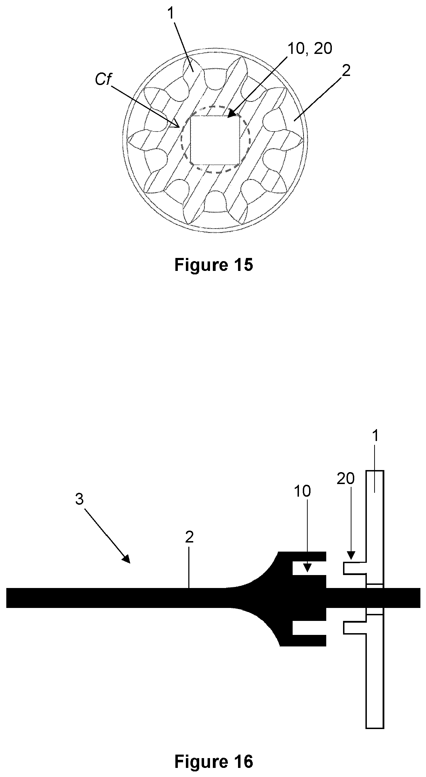

La figure 16 illustre un assemblage horloger 3 selon un septième mode de réalisation, qui est toujours un pignon arbré. Dans ce mode de réalisation, le premier composant horloger 1 est un arbre, qui comprend une gorge agencée sur sa périphérie, formant une ouverture 10. Le deuxième composant horloger 2 est un pignon, comprenant une saillie formant une conformation 20 destinée à coopérer avec l'ouverture 10.

Naturellement, l'invention ne se limite pas aux modes de réalisation décrits précédemment, ni aux géométries particulières décrites. Plus généralement, le premier composant horloger 1 est un composant femelle, qui comprend au moins une ouverture 10, et le deuxième composant horloger 2 est un composant mâle, qui comprend au moins une conformation 20 prévue pour venir s'insérer dans ladite ouverture 10, cette conformation et cette ouverture pouvant présenter toute forme et toute dimension adaptées. Par exemple, l'ouverture 10 peut être traversante ou borgne. L'ouverture 10 peut, par exemple, se présenter sous la forme d'un trou ou d'une gorge. Préférentiellement, l'ouverture 10 peut présenter une forme conique, cylindrique ou non, ovoïde ou elliptique ou polygonale, une section transversale circulaire ou non circulaire, ellipsoïdale, polygonale et/ou comprenant une denture ou au moins un méplat. La section de l'ouverture de réception peut être ouverte ou fermée. Le premier composant horloger 1 peut comprendre plusieurs ouvertures 10.

La conformation 20 constitue une portion du deuxième composant horloger 2. Cette portion peut être constituée par le pourtour extérieur du deuxième composant horloger 2 ou encore par un pied ou plus généralement une saillie du composant horloger 2. Plus généralement, la conformation peut correspondre à une portion constituant au moins en partie le corps du deuxième composant, comme une paroi extérieure du composant horloger 2, ou alternativement, la conformation peut être une portion spécifique ajoutée, comme un pied faisant saillie du corps principal du deuxième composant horloger. La conformation peut comprendre plusieurs portions distinctes, par exemple plusieurs pieds, par exemple deux pieds.

La section de la conformation 20 est adaptée à la section de l'ouverture 10, et peut donc présenter une section transversale cylindrique ou non cylindrique, conique, polygonale et/ou comprenant une denture ou au moins un méplat. Ces dimensions de la conformation 20 et d'une ouverture correspondante 10 sont donc sensiblement les mêmes, de sorte à permettre l'obtention d'un jeu lors de la configuration temporaire, qui permet leur positionnement relatif facile, tout en garantissant une mobilité minimale entre les deux composants horlogers dans le positionnement d'assemblage temporaire non solidaire. Avantageusement, la distance entre les deux composants horlogers au niveau de leur liaison, c'est-à-dire formant le jeu entre la conformation et l'ouverture, est inférieure ou égale à 4 µm, voire inférieure ou égale à 2 µm. Avantageusement aussi, cette distance est supérieure ou égale à 1 µm, voire supérieure ou égale à 1.5 µm. Le dimensionnement prend en compte l'augmentation dimensionnelle linéaire du premier composant horloger lors du traitement thermique préalable, et plus particulièrement de son ouverture 10, qui est de l'ordre de 0.4% à 1.5%. La géométrie des composants horlogers sera avantageusement choisie pour permettre un jeu suffisant avant le traitement thermique, permettant dans tous les cas leur assemblage à moindre jeu, tout en atteignant une solidarisation satisfaisante en un temps acceptable par le traitement thermique. La conformation peut ainsi comprendre une dimension comprise entre celle de l'ouverture du premier composant horloger et celle de cette même ouverture agrandie par le traitement thermique préalable.

Comme mentionné, les dimensions de la conformation et de l'ouverture peuvent être diverses. Par exemple, la section de l'ouverture et de la conformation respectivement des premier et deuxième composants horlogers peuvent s'inscrire au sein d'un cercle présentant un diamètre de 50 mm, voire de 30 mm, voire de 5 mm, voire de 3 mm, voire de 2 mm, voire de 1 mm, voire de 0.5 mm, après assemblage. Avant la première étape, l'au moins une ouverture présente une première dimension. Après la première étape, l'au moins une ouverture présente une deuxième dimension. L'au moins une conformation du deuxième composant présente une troisième dimension, comprise entre les première et deuxième dimensions de l'au moins une ouverture. Cette troisième dimension peut notamment être de l'ordre de celle de la première dimension, aux tolérances de fabrication près.

L'assemblage horloger peut comprendre plusieurs deuxièmes composants horlogers assemblés sur le même premier composant horloger, ou plusieurs premiers composants horlogers assemblés au même deuxième composant horloger. Dans un tel cas, l'assemblage horloger implique donc plus de deux composants horlogers. Un tel assemblage peut être réalisé par le même procédé, dans lequel au moins trois composants horlogers peuvent être assemblés entre eux simultanément. En variante, le procédé d'assemblage peut être séquentiel, pour assembler les composants deux par deux, en prenant en compte que les composants assemblés auparavant se désolidarisent chaque fois que le traitement thermique préalable est effectué, et solidarisent à nouveau chaque fois le traitement thermique de solidarisation est achevé.

Naturellement, l'invention ne se limite pas aux modes de réalisation décrits précédemment, mentionnés à titre d'exemples, dans lesquels le premier composant horloger peut être un disque de lunette, une lunette, une bague de lunette, un cadran, et le deuxième composant horloger peut être une applique, un disque de lunette. L'invention peut être généralisée à de nombreux assemblages horlogers, en particulier dans le domaine de l'habillage, et peut par exemple concerner tout composant d'habillage, au sein d'une boîte de montre, d'un cadran, ou d'un bracelet.

L'invention ne se limite pas au domaine de l'habillage, et peut aussi s'utiliser dans le domaine du mouvement, pour assembler deux composants du mouvement horloger. A titre d'exemple, comme illustré, le premier composant peut par exemple être un pignon, et le deuxième composant un arbre, ou inversement. Plus généralement, l'invention peut être appliquée pour assembler tout composant du mouvement, comme un rubis ou comme une bascule, un levier, une came, ou tout composant denté, à un arbre.

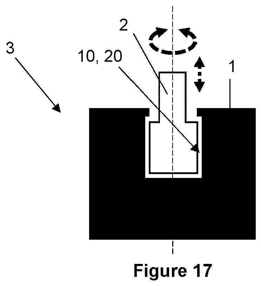

L'invention permet également d'assembler un deuxième composant sur un premier composant, en solidarisant un deuxième composant sur un premier composant, tout en maintenant un degré de liberté entre les deux composants, le deuxième composant horloger restant mobile relativement au premier composant horloger. La figure 17 illustre ainsi à titre d'exemple un assemblage horloger 3 au sein duquel une conformation 20 d'un deuxième composant horloger 2 est encloisonnée au sein d'une ouverture 10 d'un premier composant horloger 1. Le deuxième composant horloger 2 est ainsi mobile en translation et mobile en rotation au sein de l'ouverture 10, mais sa conformation 20 ne peut pas s'échapper de cette ouverture 10 dont l'embouchure présente une dimension inférieure à celle de la conformation 20. Ainsi, les deux composants horlogers sont bien solidaires entre eux. Ainsi, dans un tel mode de réalisation, le traitement thermique de solidarisation entraine un emprisonnement de la au moins une conformation 20 du deuxième composant horloger 2 dans un logement délimité par l'au moins une ouverture 10 du premier composant horloger 1, les deux composants horlogers 1, 2 étant solidarisés entre eux de manière mobile l'un par rapport à l'autre.

D'autre part, comme mentionné précédemment, l'invention présente l'avantage d'être compatible avec au moins un premier composant horloger se présentant en zircone frittée, en phase tétragonale, non déformée, comme ce serait le cas si elle subissait un autre procédé d'assemblage que l'invention, comme un chassage, ce qui induirait des contraintes internes induisant un risque non négligeable de casse de la céramique. Le premier composant horloger ne présente donc pas de contrainte interne après assemblage, particulièrement au niveau de la zone de liaison. Une zircone en phase tétragonale particulière, apte à un changement de phase vers une phase monoclinique à une température supérieure à 100 degrés Celsius, voire comprise entre 100 et 400 degrés Celsius, à pression ambiante, est plus précisément utilisée.

La zircone en phase tétragonale particulière du premier composant horloger peut notamment être une zircone frittée, en particulier une zircone yttriée, notamment une zircone yttriée 3% molaire ou une zircone yttriée 2% molaire. Cette zircone peut être colorée par pigmentation et/ou par imprégnation. Cette zircone peut aussi présenter des grains de taille différente des grains de la zircone particulière du premier composant horloger. Comme mentionné précédemment, toutes les zircones ne présentent pas la propriété d'aptitude au changement de phase de la zircone choisie par l'invention. Pour cela, plusieurs facteurs participent à cette propriété et la personne du métier saura identifier les zircones particulières adaptées à la mise en œuvre de l'invention. Par exemple, il apparaît que la taille des grains après le frittage de la zircone a une influence sur l'aptitude de la zircone au tel changement de phase. Ainsi, une même zircone noire telle que celle détaillée ci-dessus, mais frittée avec un cycle thermique plus court et à plus basse température (p.e. environ 5 min à 1300°C à la place de 1 heure à 1350°C) ne manifeste pas d'aptitude au changement de phase.

Même si l'invention peut être mise en œuvre à partir d'une seule portion de liaison (comprenant au moins une ouverture) se présentant dans une telle zircone, il est avantageux d'utiliser un premier composant horloger qui se présente en totalité dans le même matériau. Avantageusement encore, le premier composant horloger se présente sous une forme monobloc, notamment même d'un seul tenant.

Le matériau du deuxième composant peut aussi être une céramique, et même une zircone, notamment une zircone qui ne présente pas la propriété particulière de la zircone du premier composant horloger. Ainsi, une telle zircone est choisie insensible ou sensible de manière négligeable, relativement au premier composant horloger, aux traitements thermiques du procédé de fabrication. Notamment, cette zircone n'a pas de changement de phase lors du traitement thermique de solidarisation, ou en faible proportion. Son coefficient thermique de dilatation est sensiblement similaire ou inférieur à celui de la zircone du premier composant pour ne pas induire des contraintes dans le premier composant hors de sa limite élastique. Comme mentionné précédemment, toutes les zircones ne présentent pas la propriété d'aptitude au changement de phase de la zircone choisie par l'invention. Pour cela, plusieurs facteurs participent à cette propriété et la personne du métier saura identifier les zircones particulières adaptées à la mise en œuvre de l'invention. Cette zircone peut être colorée par pigmentation et/ou par imprégnation. Cette zircone peut aussi présenter des grains de taille différente des grains de la zircone particulière du premier composant horloger. Il est ainsi possible d'assembler par l'invention deux composants en zircone noire, pour autant que leurs propriétés, par exemple leurs tailles de grain, soient judicieusement choisies. Plus généralement, la zircone du deuxième composant est différente de celle du premier composant. Elle peut avoir une finition différente, par exemple une finition matte par rapport une finition polie. Plus généralement, le matériau du deuxième composant horloger peut être toute céramique technique insensible aux traitements thermiques. Il peut par exemple s'agir d'une alumine Al₂O₃, du nitrure de bore BN, du carbure de bore B₄C, de nitrure de silice Si₃N₄, de carbure de silice SiC, de nitrure d'aluminium AIN, des borures et des nitrures de Ti, Zr et Hf, ou encore du saphir, du rubis ou du quartz cristallin. Alternativement, le matériau du deuxième composant peut être un matériau réfractaire comme un métal (Pt, W), un cermet ou encore un verre (verre de quartz fondu).

L'invention porte aussi sur un mouvement horloger qui comprend un ou plusieurs assemblages horlogers tels que décrits précédemment.

L'invention porte aussi sur une pièce d'horlogerie, qui comprend au moins un assemblage horloger tel que décrits précédemment ou un tel mouvement horloger.

En remarque, l'invention a été détaillée sur la base d'une portion de liaison femelle du premier composant qui permet une solidarisation résultant d'un changement de phase d'une partie à base de zircone la constituant. En variante, un tel changement de phase d'une partie à base de zircone particulière, telle que décrite précédemment, peut être exploité pour atteindre une solidarisation à partir d'une partie en zircone frittée du deuxième composant horloger, plus précisément de sa conformation formant une portion de liaison mâle. En effet, si une telle conformation subit un changement de phase, total ou partiel, d'une phase tétragonale à une phase monoclinique, selon le principe décrit en référence avec le traitement thermique préalable décrit précédemment, alors il en résulte une dilatation, c'est-à-dire une augmentation de ses dimensions, qui peut aussi conduire à un serrage d'une ouverture du premier composant. Ainsi, tous les modes de réalisation décrits précédemment peuvent être mis en œuvre à partir d'une partie en zircone frittée de la conformation du deuxième composant horloger, qui change de phase en agrandissant ses dimensions. Après solidarisation des deux composants horlogers, cette partie en zircone frittée a donc subi un changement de phase de tétragonale à monoclinique.

Dans ce mode de réalisation, au moins la portion de liaison du premier composant horloger peut se présenter dans un des matériaux mentionnés pour le deuxième composant horloger dans les modes de réalisation précédents.

L'invention porte donc aussi sur un procédé de fabrication d'un assemblage horloger, caractérisé en ce qu'une conformation du deuxième composant horloger forme une partie à base de zircone frittée, caractérisé en ce qu'il comprend les étapes suivantes :
∘ Assembler dans une configuration intermédiaire deux composants horlogers, de sorte que la au moins une conformation du deuxième composant horloger soit positionnée au sein d'une ouverture d'une portion de liaison du premier composant horloger ;
∘ Soumettre ledit assemblage horloger dans sa configuration intermédiaire au traitement thermique de solidarisation, de sorte à induire un changement de phase de la zircone de la conformation du deuxième composant horloger, de la phase tétragonale à la phase monoclinique, qui induit une dilatation de ladite au moins une conformation du deuxième composant horloger, pour solidariser ainsi le premier et le deuxième composant horloger de l'assemblage horloger dans une configuration finale.

En remarque, dans ce mode de réalisation, les conditions du traitement thermique de solidarisation correspondent au traitement thermique préalable des modes de réalisation décrits précédemment.

Selon encore une autre approche, au moins les deux portions de liaison des deux composants horlogers, c'est-à-dire la portion de liaison comprenant l'ouverture et la conformation, pourraient se présenter dans le même matériau à base de zircone frittée particulière, tel que détaillé précédemment. Dans un tel cas, lors du traitement thermique de solidarisation, les deux portions venant en liaison pourraient subir un changement de dimension. La conformation, étant initialement en phase tétragonale, subirait un changement de phase au début du traitement thermique de solidarisation, dans l'intervalle de 100°-400°C, de la phase tétragonale vers la phase monoclinique. L'ouverture dans cet intervalle ne peut qu'augmenter ou rester inchangée. De ce fait, lors de la montée de la température, les deux composants se retrouvent en état dilaté et peuvent déjà se solidariser. Lors de la suite du traitement thermique de solidarisation, dans l'intervalle 400°-1300°C, les deux composants, en étant en phase monoclinique et potentiellement déjà solidarisés, subiront simultanément le changement de phase de monoclinique vers tétragonale, jusqu'à aboutir à une solidarisation finale, en restant en phase tétragonale, telle que décrite précédemment.

Finalement, le procédé de l'invention exploite le concept consistant à modifier la dimension d'au moins une partie à base de zircone frittée lors d'un changement de phase, de tétragonale à monoclinique ou inversement, pour solidariser deux composants horlogers.

## Revendications

1. Procédé de fabrication d'un assemblage horloger (3) comprenant un premier composant horloger (1), comprenant une portion de liaison comprenant au moins une ouverture (10), et au moins un deuxième composant horloger (2), distinct du premier composant horloger (1), comprenant au moins une conformation (20), au moins l'une de ladite portion de liaison du premier composant horloger (1) et de la conformation du deuxième composant horloger (2) formant une partie à base de zircone frittée, comprenant une étape de traitement thermique de solidarisation, **caractérisé en ce que** ledit traitement thermique est prédéfini pour induire un changement de phase, de la phase tétragonale à la phase monoclinique, ou inversement, de ladite partie à base de zircone frittée, ce changement de phase induisant un changement de dimension d'au moins ladite partie à base de zircone frittée, de sorte à solidariser la portion de liaison du premier composant horloger (1) et la conformation du deuxième composant horloger (2).

2. Procédé de fabrication d'un assemblage horloger selon la revendication précédente, **caractérisé en ce que** ladite conformation (20) du deuxième composant horloger (2) forme ladite partie à base de zircone frittée, **caractérisé en ce qu'**il comprend les étapes suivantes :
∘ Assembler dans une configuration intermédiaire lesdits deux composants horlogers (1, 2), de sorte que la au moins une conformation (20) du deuxième composant horloger (2) soit positionnée au sein de la au moins une ouverture (10) de la portion de liaison du premier composant horloger (1) ;
∘ Soumettre ledit assemblage horloger (3) dans sa configuration intermédiaire au traitement thermique de solidarisation, de sorte à induire un changement de phase de la zircone de la conformation (20) du deuxième composant horloger (2), de la phase tétragonale à la phase monoclinique, qui induit une dilatation de ladite au moins une conformation (20) du deuxième composant horloger (2), pour solidariser ainsi le premier et le deuxième composant horloger de l'assemblage horloger (3) dans une configuration finale.

3. Procédé de fabrication d'un assemblage horloger (3) selon la revendication 1, **caractérisé en ce que** ladite portion de liaison du premier composant horloger (1) forme ladite partie à base de zircone frittée, **caractérisé en ce qu'**il comprend les étapes suivantes :
∘ Soumettre le premier composant horloger (1) à un traitement thermique préalable de sorte à induire un premier changement de phase de la zircone de la portion de liaison, de la phase tétragonale à la phase monoclinique, ce premier changement de phase induisant un agrandissement de ladite au moins une ouverture (10) du premier composant horloger (1) ;
∘ Assembler dans une configuration intermédiaire lesdits deux composants horlogers (1, 2), de sorte que la au moins une conformation (20) du deuxième composant horloger (2) soit positionnée au sein de la au moins une ouverture (10) de la portion de liaison du premier composant horloger (1) ;
∘ Soumettre ledit assemblage horloger (3) dans sa configuration intermédiaire au traitement thermique de solidarisation, de sorte à induire un deuxième changement de phase de la zircone de la portion de liaison du premier composant horloger (1), de la phase monoclinique à la phase tétragonale, qui induit un rétrécissement de ladite au moins une ouverture (10) du premier composant horloger (1), pour solidariser ainsi le premier et le deuxième composant horloger de l'assemblage horloger (3) dans une configuration finale.

4. Procédé de fabrication d'un assemblage horloger selon la revendication précédente, **caractérisé en ce que** le traitement thermique préalable est effectué à pression ambiante, voire à une pression inférieure à 2 atm, et à une température comprise entre 100 et 400 degrés Celsius.

5. Procédé de fabrication d'un assemblage horloger selon l'une des revendications précédentes, **caractérisé en ce que** le traitement thermique de solidarisation est effectué à pression ambiante, voire à une pression inférieure à 2 atm, et à une température comprise entre 1100 et 1300 degrés Celsius ou est effectué à pression ambiante, voire à une pression inférieure à 2 atm, et à une température comprise entre 100 et 400 degrés Celsius.

6. Procédé de fabrication d'un assemblage horloger selon l'une des revendications précédentes, **caractérisé en ce que** l'un des deux composants horlogers comprend ladite partie à base de zircone frittée et **en ce que** l'autre des deux composants horlogers est dans un matériau présentant un changement dimensionnel négligeable relativement audit changement de dimension de l'au moins une partie à base de zircone frittée lors du traitement thermique de solidarisation.

7. Procédé de fabrication d'un assemblage horloger selon la revendication précédente, **caractérisé en ce que** tout ou partie de l'autre des deux composants horlogers se présente à base de céramique technique, comme de la zircone différente ou identique à celle de ladite partie à base de zircone frittée, de l'alumine (Al2O3), du nitrure de silicium (Si3N4), du nitrure de bore BN, du carbure de bore B4C, du carbure de silicium (SiC), du nitrure d'aluminium (AIN), des borures et des nitrures de Ti, Zr et Hf, du saphir, du rubis ou du quartz cristallin, ou **en ce que** tout ou partie de l'autre des deux composants horlogers est en matériau réfractaire comme un métal, un cermet ou un verre, comme un verre de quartz fondu.

8. Procédé de fabrication d'un assemblage horloger selon l'une des revendications précédentes, **caractérisé en ce que** la section transversale de l'au moins une ouverture (10) de la portion de liaison du premier composant horloger (1) est inscrite dans un cercle présentant un diamètre inférieur ou égal à 50 mm, voire inférieur ou égal à 30 mm, voire inférieur ou égal à 5 mm, voire inférieur ou égal à 3 mm, voire inférieur ou égal à 2 mm, voire inférieur ou égal à 1 mm, voire inférieur ou égal à 0.5 mm, et/ou **en ce que** le changement dimensionnel de l'au moins une partie à base de zircone frittée suite au traitement thermique préalable est compris entre 0.4% et 1.5%, et/ou **en ce que** la au moins une conformation (20) comprend une dimension sensiblement égale à celle de l'au moins une ouverture (10) de la portion de liaison du premier composant horloger (1).

9. Procédé de fabrication d'un assemblage horloger selon l'une des revendications précédentes, **caractérisé en ce que** l'au moins une ouverture (10) de la portion de liaison du premier composant horloger (1) présente une forme cylindrique ou non cylindrique, notamment conique ou ovoïde ou elliptique ou polygonale, ou comprend une section polygonale, ou dentée, ou avec un ou plusieurs méplats, et/ou **en ce que** la au moins une conformation (20) du deuxième composant horloger (2) présente une géométrie complémentaire à celle de l'ouverture (10) de la portion de liaison du premier composant horloger (1).

10. Procédé de fabrication d'un assemblage horloger selon l'une des revendications précédentes, **caractérisé en ce que** l'assemblage horloger (3) comprend le deuxième composant horloger (2) et au moins un troisième composant horloger assemblés au premier composant horloger (1), ou **en ce que** le deuxième composant horloger (2) comprend plusieurs conformations (20) coopérant respectivement avec plusieurs ouvertures (10) du premier composant horloger.

11. Procédé de fabrication d'un assemblage horloger selon l'une des revendications précédentes, **caractérisé en ce que** l'étape consistant à soumettre ledit assemblage horloger (3) à un traitement thermique de solidarisation entraine un serrage de l'au moins une ouverture (10) du premier composant horloger (1) par son rétrécissement sur la au moins une conformation (20) du deuxième composant horloger (2) et/ou un serrage de l'au moins une ouverture (10) du premier composant horloger (1) sur la au moins une conformation (20) du deuxième composant horloger (2) par l'agrandissement de cette conformation (20), et la solidarisation des deux composants horlogers (1, 2), ou **en ce que** l'étape consistant à soumettre ledit assemblage horloger (3) à un traitement thermique de solidarisation entraine un emprisonnement de la au moins une conformation (20) du deuxième composant horloger (2) dans un logement délimité par l'au moins une ouverture (10) du premier composant horloger (1), les deux composants horlogers (1, 2) étant solidarisés entre eux de manière mobile l'un par rapport à l'autre.

12. Assemblage horloger comprenant un premier composant horloger (1) et au moins un deuxième composant horloger (2) distinct comprenant au moins une conformation (20), le premier composant horloger (1) et le deuxième composant horloger (2) étant fixés entre eux par un serrage sans déformation de l'ouverture du premier composant horloger (1) sur la au moins une conformation (20) du deuxième composant horloger (2), **caractérisé en ce que** ledit premier composant horloger (1) comprend une portion de liaison à base de zircone en phase tétragonale comprenant au moins une ouverture (10), ou **en ce que** ledit au moins un deuxième composant horloger (2) comprend au moins une conformation à base de zircone en phase monoclinique.

13. Assemblage horloger, **caractérisé en ce qu'**il comprend un premier composant horloger (1), comprenant une portion de liaison à base de zircone en phase tétragonale, comprenant au moins une ouverture (10) et au moins un deuxième composant horloger (2) distinct comprenant au moins une conformation (20) ou **en ce qu'**il comprend un premier composant horloger (1), comprenant une portion de liaison comprenant au moins une ouverture (10) et au moins un deuxième composant horloger (2) distinct comprenant au moins une conformation (20) à base de zircone en phase monoclinique, le premier composant horloger (1) et le deuxième composant horloger (2) étant solidarisés entre eux de manière mobile l'un par rapport à l'autre par le positionnement de la au moins une conformation (20) du deuxième composant horloger (2) dans un logement délimité par l'au moins une ouverture (10) du premier composant horloger (1).

14. Assemblage horloger selon la revendication 12 ou 13, **caractérisé en ce que** la portion de liaison du premier composant horloger est à base de zircone en phase tétragonale apte à un changement de phase vers une phase monoclinique à une température supérieure à 100 degrés Celsius, voire comprise entre 100 et 400 degrés Celsius, à pression ambiante, voire à une pression inférieure à 2 atm.

15. Assemblage horloger selon l'une des revendications 12 à 14, **caractérisé en ce que** l'un des deux composants horlogers de l'assemblage horloger comprend au moins une partie à base de zircone tétragonale ou monoclinique et **en ce que** l'autre des deux composants horlogers de l'assemblage horloger est en tout ou partie à base de céramique technique présentant un changement dimensionnel négligeable par rapport au changement dimensionnel de l'au moins une partie à base de zircone tétragonale ou monoclinique lors d'un traitement thermique de solidarisation, comme de la zircone différente de celle de ladite partie à base de zircone tétragonale ou monoclinique, de l'alumine (Al2O3), du nitrure de bore (BN), du carbure de bore (B4C), du nitrure de silicium (Si3N4), du carbure de silicium (SiC), du nitrure d'aluminium (AIN), des borures et des nitrures de Ti, Zr et Hf, du saphir, du rubis ou du quartz cristallin, ou **en ce que** la au moins une conformation (20) du deuxième composant horloger (2) est en matériau réfractaire comme un métal, un cermet ou un verre, comme un verre de quartz fondu.

16. Assemblage horloger selon l'une des revendications 12 à 15, **caractérisé en ce que** la au moins une conformation (20) du deuxième composant horloger (2) est une saillie ou un pied ou une portion du corps du deuxième composant horloger (2), ou **en ce que** le premier composant horloger (1) est une lunette ou une bague de lunette et le deuxième composant horloger (2) est un disque de lunette, ou **en ce que** le premier composant horloger (1) est un disque de lunette, une lunette, un cadran, ou un bracelet, et le deuxième composant horloger (2) est un composant d'habillage, comme une applique, ou **en ce que** le premier composant horloger (1) est un pignon, comme un pignon d'échappement, une bascule, un levier, une came, un rubis, ou un composant denté et le deuxième composant horloger (2) est un arbre, ou **en ce que** le premier composant horloger (1) est un arbre et le deuxième composant horloger (2) est un pignon, une bascule, un levier, une came, ou un composant denté.

17. Pièce d'horlogerie, **caractérisée en ce qu'**elle comprend un assemblage horloger selon l'une des revendications 12 à 16.

## Patentansprüche

1. Verfahren zur Herstellung einer Uhrenbaugruppe (3), umfassend einen ersten Uhrenteil (1), umfassend einen Verbindungsabschnitt mit mindestens einer Öffnung (10), und mindestens einen zweiten Uhrenteil (2), der von dem ersten Uhrenteil (1) verschieden ist, umfassend mindestens eine Ausformung (20), wobei mindestens eine von dem Verbindungsabschnitt des ersten Uhrenteils (1) und der Ausformung des zweiten Uhrenteils (2) einen Teil auf Basis von gesintertem Zirkonoxid bildet, umfassend einen Schritt der thermischen Verfestigungsbehandlung, **dadurch gekennzeichnet, dass** die thermische Behandlung vordefiniert ist, um einen Phasenwechsel von der tetragonalen Phase zur monoklinen Phase oder umgekehrt des Teils auf Basis von gesintertem Zirkonoxid zu induzieren, wobei dieser Phasenwechsel eine Dimensionsänderung mindestens des Teils auf Basis von gesintertem Zirkonoxid induziert, um den Verbindungsabschnitt des ersten Uhrenteils (1) und die Ausformung des zweiten Uhrenteils (2) zu verbinden.

2. Verfahren zur Herstellung einer Uhrenbaugruppe nach dem vorhergehenden Anspruch, **dadurch gekennzeichnet, dass** die Ausformung (20) des zweiten Uhrenteils (2) den Teil auf Basis von gesintertem Zirkonoxid bildet, **dadurch gekennzeichnet, dass** es die folgenden Schritte umfasst:
∘ Zusammenbauen der beiden Uhrenteile (1, 2) in einer Zwischenkonfiguration, so dass die mindestens eine Ausformung (20) des zweiten Uhrenteils (2) innerhalb der mindestens einen Öffnung (10) des Verbindungsabschnitts des ersten Uhrenteils (1) positioniert ist;
∘ Unterwerfen der Uhrenbaugruppe (3) in ihrer Zwischenkonfiguration der thermischen Verfestigungsbehandlung, um einen Phasenwechsel des Zirkonoxids der Ausformung (20) des zweiten Uhrenteils (2) von der tetragonalen Phase zur monoklinen Phase zu induzieren, der eine Ausdehnung der mindestens einen Ausformung (20) des zweiten Uhrenteils (2) induziert, um so den ersten und den zweiten Uhrenteil der Uhrenbaugruppe (3) in einer Endkonfiguration zu verbinden.

3. Verfahren zur Herstellung einer Uhrenbaugruppe (3) nach Anspruch 1, **dadurch gekennzeichnet, dass** der Verbindungsabschnitt des ersten Uhrenteils (1) den Teil auf Basis von gesintertem Zirkonoxid bildet, **dadurch gekennzeichnet, dass** es die folgenden Schritte umfasst:
∘ Unterwerfen des ersten Uhrenteils (1) einer vorherigen thermischen Behandlung, um einen ersten Phasenwechsel des Zirkonoxids des Verbindungsabschnitts von der tetragonalen Phase zur monoklinen Phase zu induzieren, wobei dieser erste Phasenwechsel eine Vergrößerung der mindestens einen Öffnung (10) des ersten Uhrenteils (1) induziert;
∘ Zusammenbauen der beiden Uhrenteile (1, 2) in einer Zwischenkonfiguration, so dass die mindestens eine Ausformung (20) des zweiten Uhrenteils (2) innerhalb der mindestens einen Öffnung (10) des Verbindungsabschnitts des ersten Uhrenteils (1) positioniert ist;
∘ Unterwerfen der Uhrenbaugruppe (3) in ihrer Zwischenkonfiguration der thermischen Verfestigungsbehandlung, um einen zweiten Phasenwechsel des Zirkonoxids des Verbindungsabschnitts des ersten Uhrenteils (1) von der monoklinen Phase zur tetragonalen Phase zu induzieren, der eine Verengung der mindestens einen Öffnung (10) des ersten Uhrenteils (1) induziert, um so den ersten und den zweiten Uhrenteil der Uhrenbaugruppe (3) in einer Endkonfiguration zu verbinden.

4. Verfahren zur Herstellung einer Uhrenbaugruppe nach dem vorhergehenden Anspruch, **dadurch gekennzeichnet, dass** die vorherige thermische Behandlung bei Umgebungsdruck oder sogar bei einem Druck unter 2 atm und bei einer Temperatur zwischen 100 und 400 Grad Celsius durchgeführt wird.

5. Verfahren zur Herstellung einer Uhrenbaugruppe nach einem der vorhergehenden Ansprüche, **dadurch gekennzeichnet, dass** die thermische Verfestigungsbehandlung bei Umgebungsdruck oder sogar bei einem Druck unter 2 atm und bei einer Temperatur zwischen 1100 und 1300 Grad Celsius durchgeführt wird oder bei Umgebungsdruck oder sogar bei einem Druck unter 2 atm und bei einer Temperatur zwischen 100 und 400 Grad Celsius durchgeführt wird.

6. Verfahren zur Herstellung einer Uhrenbaugruppe nach einem der vorhergehenden Ansprüche, **dadurch gekennzeichnet, dass** einer der beiden Uhrenteile den Teil auf Basis von gesintertem Zirkonoxid umfasst und dass der andere der beiden Uhrenteile aus einem Material besteht, das eine vernachlässigbare Dimensionsänderung relativ zu der Dimensionsänderung des mindestens einen Teils auf Basis von gesintertem Zirkonoxid während der thermischen Verfestigungsbehandlung aufweist.

7. Verfahren zur Herstellung einer Uhrenbaugruppe nach dem vorhergehenden Anspruch, **dadurch gekennzeichnet, dass** der andere der beiden Uhrenteile ganz oder teilweise auf Basis von technischer Keramik vorliegt, wie Zirkonoxid, das von dem des Teils auf Basis von gesintertem Zirkonoxid verschieden oder identisch ist, Aluminiumoxid (Al2O3), Siliciumnitrid (Si3N4), Bornitrid BN, Borcarbid B4C, Siliciumcarbid (SiC), Aluminiumnitrid (AIN), Boride und Nitride von Ti, Zr und Hf, Saphir, Rubin oder kristallines Quarz, oder dass der andere der beiden Uhrenteile ganz oder teilweise aus feuerfestem Material wie einem Metall, einem Cermet oder einem Glas, wie geschmolzenem Quarzglas, besteht.

8. Verfahren zur Herstellung einer Uhrenbaugruppe nach einem der vorhergehenden Ansprüche, **dadurch gekennzeichnet, dass** der Querschnitt der mindestens einen Öffnung (10) des Verbindungsabschnitts des ersten Uhrenteils (1) in einen Kreis mit einem Durchmesser von höchstens 50 mm oder sogar höchstens 30 mm oder sogar höchstens 5 mm oder sogar höchstens 3 mm oder sogar höchstens 2 mm oder sogar höchstens 1 mm oder sogar höchstens 0,5 mm eingeschrieben ist, und/oder dass die Dimensionsänderung des mindestens einen Teils auf Basis von gesintertem Zirkonoxid nach der vorherigen thermischen Behandlung zwischen 0,4% und 1,5% liegt, und/oder dass die mindestens eine Ausformung (20) eine Dimension umfasst, die im Wesentlichen gleich der der mindestens einen Öffnung (10) des Verbindungsabschnitts des ersten Uhrenteils (1) ist.

9. Verfahren zur Herstellung einer Uhrenbaugruppe nach einem der vorhergehenden Ansprüche, **dadurch gekennzeichnet, dass** die mindestens eine Öffnung (10) des Verbindungsabschnitts des ersten Uhrenteils (1) eine zylindrische oder nichtzylindrische Form aufweist, insbesondere konisch oder eiförmig oder elliptisch oder polygonal, oder einen polygonalen oder gezahnten Querschnitt oder mit einer oder mehreren Abflachungen umfasst, und/oder dass die mindestens eine Ausformung (20) des zweiten Uhrenteils (2) eine Geometrie aufweist, die komplementär zu der der Öffnung (10) des Verbindungsabschnitts des ersten Uhrenteils (1) ist.

10. Verfahren zur Herstellung einer Uhrenbaugruppe nach einem der vorhergehenden Ansprüche, **dadurch gekennzeichnet, dass** die Uhrenbaugruppe (3) den zweiten Uhrenteil (2) und mindestens einen dritten Uhrenteil umfasst, die an dem ersten Uhrenteil (1) montiert sind, oder dass der zweite Uhrenteil (2) mehrere Ausformungen (20) umfasst, die jeweils mit mehreren Öffnungen (10) des ersten Uhrenteils zusammenwirken.

11. Verfahren zur Herstellung einer Uhrenbaugruppe nach einem der vorhergehenden Ansprüche, **dadurch gekennzeichnet, dass** der Schritt des Unterwerfens der Uhrenbaugruppe (3) einer thermischen Verfestigungsbehandlung eine Klemmung der mindestens einen Öffnung (10) des ersten Uhrenteils (1) durch ihre Verengung auf die mindestens eine Ausformung (20) des zweiten Uhrenteils (2) und/oder eine Klemmung der mindestens einen Öffnung (10) des ersten Uhrenteils (1) auf die mindestens eine Ausformung (20) des zweiten Uhrenteils (2) durch die Vergrößerung dieser Ausformung (20) und die Verbindung der beiden Uhrenteile (1, 2) bewirkt, oder dass der Schritt des Unterwerfens der Uhrenbaugruppe (3) einer thermischen Verfestigungsbehandlung eine Einschließung der mindestens einen Ausformung (20) des zweiten Uhrenteils (2) in einem durch die mindestens eine Öffnung (10) des ersten Uhrenteils (1) begrenzten Gehäuse bewirkt, wobei die beiden Uhrenteile (1, 2) beweglich zueinander verbunden sind.

12. Uhrenbaugruppe, umfassend einen ersten Uhrenteil (1) und mindestens einen verschiedenen zweiten Uhrenteil (2), der mindestens eine Ausformung (20) umfasst, wobei der erste Uhrenteil (1) und der zweite Uhrenteil (2) durch eine Klemmung ohne Verformung der Öffnung des ersten Uhrenteils (1) auf die mindestens eine Ausformung (20) des zweiten Uhrenteils (2) miteinander befestigt sind, **dadurch gekennzeichnet, dass** der erste Uhrenteil (1) einen Verbindungsabschnitt auf Basis von Zirkonoxid in tetragonaler Phase umfasst, der mindestens eine Öffnung (10) umfasst, oder dass der mindestens eine zweite Uhrenteil (2) mindestens eine Ausformung auf Basis von Zirkonoxid in monokliner Phase umfasst.

13. Uhrenbaugruppe, **dadurch gekennzeichnet, dass** sie einen ersten Uhrenteil (1) umfasst, der einen Verbindungsabschnitt auf Basis von Zirkonoxid in tetragonaler Phase umfasst, der mindestens eine Öffnung (10) umfasst, und mindestens einen verschiedenen zweiten Uhrenteil (2), der mindestens eine Ausformung (20) umfasst, oder dass sie einen ersten Uhrenteil (1) umfasst, der einen Verbindungsabschnitt mit mindestens einer Öffnung (10) umfasst, und mindestens einen verschiedenen zweiten Uhrenteil (2), der mindestens eine Ausformung (20) auf Basis von Zirkonoxid in monokliner Phase umfasst, wobei der erste Uhrenteil (1) und der zweite Uhrenteil (2) beweglich zueinander durch die Positionierung der mindestens einen Ausformung (20) des zweiten Uhrenteils (2) in einem durch die mindestens eine Öffnung (10) des ersten Uhrenteils (1) begrenzten Gehäuse verbunden sind.

14. Uhrenbaugruppe nach Anspruch 12 oder 13, **dadurch gekennzeichnet, dass** der Verbindungsabschnitt des ersten Uhrenteils auf Basis von Zirkonoxid in tetragonaler Phase vorliegt, das zu einem Phasenwechsel zu einer monoklinen Phase bei einer Temperatur über 100 Grad Celsius oder sogar zwischen 100 und 400 Grad Celsius bei Umgebungsdruck oder sogar bei einem Druck unter 2 atm geeignet ist.

15. Uhrenbaugruppe nach einem der Ansprüche 12 bis 14, **dadurch gekennzeichnet, dass** einer der beiden Uhrenteile der Uhrenbaugruppe mindestens einen Teil auf Basis von tetragonalem oder monoklinischem Zirkonoxid umfasst und dass der andere der beiden Uhrenteile der Uhrenbaugruppe ganz oder teilweise auf Basis von technischer Keramik vorliegt, die eine vernachlässigbare Dimensionsänderung im Vergleich zur Dimensionsänderung des mindestens einen Teils auf Basis von tetragonalem oder monoklinischem Zirkonoxid während einer thermischen Verfestigungsbehandlung aufweist, wie Zirkonoxid, das von dem des Teils auf Basis von tetragonalem oder monoklinischem Zirkonoxid verschieden ist, Aluminiumoxid (Al2O3), Bornitrid (BN), Borcarbid (B4C), Siliciumnitrid (Si3N4), Siliciumcarbid (SiC), Aluminiumnitrid (AIN), Boride und Nitride von Ti, Zr und Hf, Saphir, Rubin oder kristallines Quarz, oder dass die mindestens eine Ausformung (20) des zweiten Uhrenteils (2) aus feuerfestem Material wie einem Metall, einem Cermet oder einem Glas, wie geschmolzenem Quarzglas, besteht.

16. Uhrenbaugruppe nach einem der Ansprüche 12 bis 15, **dadurch gekennzeichnet, dass** die mindestens eine Ausformung (20) des zweiten Uhrenteils (2) ein Vorsprung oder ein Fuß oder ein Abschnitt des Körpers des zweiten Uhrenteils (2) ist, oder dass der erste Uhrenteil (1) eine Lünette oder ein Lünettenring ist und der zweite Uhrenteil (2) eine Lünettenscheibe ist, oder dass der erste Uhrenteil (1) eine Lünettenscheibe, eine Lünette, ein Zifferblatt oder ein Armband ist und der zweite Uhrenteil (2) eine Gehäusekomponente wie eine Applique ist, oder dass der erste Uhrenteil (1) ein Ritzel wie ein Hemmungsritzel, eine Wippe, ein Hebel, ein Nocken, ein Rubin oder eine gezahnte Komponente ist und der zweite Uhrenteil (2) eine Welle ist, oder dass der erste Uhrenteil (1) eine Welle ist und der zweite Uhrenteil (2) ein Ritzel, eine Wippe, ein Hebel, ein Nocken oder eine gezahnte Komponente ist.

17. Uhrmacherstück, **dadurch gekennzeichnet, dass** es eine Uhrenbaugruppe nach einem der Ansprüche 12 bis 16 umfasst.

## Claims

1. A method of producing a timepiece assembly (3) comprising a first timepiece component (1) comprising a connecting portion comprising at least one opening (10) and at least one second timepiece component (2) distinct from the first timepiece component (1) comprising at least one conformation (20), said connecting portion of the first timepiece component (1) and/or the conformation of the second timepiece component (2) forming a part based on a sintered zirconia, which method comprises a heat treatment step of joining together, **characterized in that** said heat treatment is predefined to induce a phase change from the tetragonal phase to the monoclinic phase, or vice versa, of said part based on a sintered zirconia, this phase change inducing a change of the dimensions of at least said part based on a sintered zirconia so as to join together the connecting portion of the first timepiece component (1) and the conformation of the second timepiece component (2).

2. The method as claimed in the preceding claim of producing a timepiece assembly, wherein said conformation (20) of the second timepiece component (2) forms said part based on a sintered zirconia, which method comprises the following steps:
∘ assembling said two timepiece components (1, 2) in an intermediate configuration so that the at least one conformation (20) of the second timepiece component (2) is positioned in the at least one opening (10) of the connecting portion of the first timepiece component (1);
∘ subjecting said timepiece assembly (3) in its intermediate configuration to the heat treatment of joining together so as to induce a phase change of the zirconia of the conformation (20) of the second timepiece component (2) from the tetragonal phase to the monoclinic phase, which induces an expansion of said at least one conformation (20) of the second timepiece component (2), to thereby join together the first and second timepiece components of the timepiece assembly (3) in a final configuration.

3. The method as claimed in claim 1 of producing a timepiece assembly (3), wherein said connecting portion of the first timepiece component (1) forms said part based on a sintered zirconia, which method comprises the following steps:
∘ subjecting the first timepiece component (1) to a preliminary heat treatment so as to induce a first phase change of the zirconia of the connecting portion from the tetragonal phase to the monoclinic phase, this first phase change inducing enlargement of said at least one opening (10) of the first timepiece component (1);
∘ assembling said two timepiece components (1, 2) in an intermediate configuration so that the at least one conformation (20) of the second timepiece component (2) is positioned in the at least one opening (10) in the connecting portion of the first timepiece component (1);
∘ subjecting said timepiece assembly (3) in its intermediate configuration to the heat treatment of joining together to induce a second phase change of the zirconia of the connecting portion of the first timepiece component (1) from the monoclinic phase to the tetragonal phase, which induces shrinkage of said at least one opening (10) of the first timepiece component (1), thereby to join together the first and second timepiece components of the timepiece assembly (3) in a final configuration.

4. The method as claimed in the preceding claim of producing a timepiece assembly, wherein the preliminary heat treatment is carried out at ambient pressure, or even at a pressure below 2 atm, and at a temperature between 100 and 400 degrees Celsius.

5. The method as claimed in any one of the preceding claims of producing a timepiece assembly, wherein the heat treatment of joining together is carried out at ambient pressure, or even at a pressure below 2 atm, and at a temperature comprising between 1100 and 1300 degrees Celsius, or is carried out at ambient pressure, or even at a pressure below 2 atm, and at a temperature between 100 and 400 degrees Celsius.

6. The method as claimed in any one of the preceding claims of producing a timepiece assembly, wherein one of the two timepiece components comprises said part based on a sintered zirconia and the other of the two timepiece components is made of a material having a negligible change of dimensions relative to said change of dimensions of the at least one part based on a sintered zirconia during the heat treatment of joining together.

7. The method as claimed in the preceding claim of producing a timepiece assembly, wherein all or part of the other of the two timepiece components is based on technical ceramic, such as a zirconia different from or identical to that of said part based on a sintered zirconia, alumina (Al2O3), silicon nitride (Si3N4), boron nitride BN, boron carbide B4C, silicon carbide (SiC), aluminum nitride (AIN), borides and nitrides of Ti, Zr and Hf, sapphire, ruby or crystalline quartz, or all or part of the other of the two timepiece components is made of a refractory material such as a metal, a cermet or a glass, such as a molten quartz glass.

8. The method as claimed in any one of the preceding claims of producing a timepiece assembly, wherein the cross section of the at least opening (10) of the connecting portion of the first timepiece component (1) is inscribed in a circle having a diameter less than or equal to 50 mm, or even less than or equal to 30 mm, or even less than or equal to 5 mm, or even less than or equal to 3 mm, or even less than or equal to 2 mm or even less than or equal to 1 mm, or even less than or equal to 0.5 mm, and/or the change in dimensions of the at least one part based on a sintered zirconia following the preliminary heat treatment is between 0.4% and 1.5% and/or the at least one conformation (20) has a dimension substantially equal to that of the at least one opening (10) in the connecting portion of the first timepiece component (1).

9. The method as claimed in any one of the preceding claims of producing a timepiece assembly, wherein the at least one opening (10) in the connecting portion of the first timepiece component (1) has a cylindrical or non-cylindrical shape, notably a conical or oval or elliptical or polygonal shape, or has a polygonal or toothed section, or a section with one or more flattened parts, and/or the at least one conformation (20) of the second timepiece component (2) has a geometry complementary to that of the opening (10) in the connecting portion of the first timepiece component (1).

10. The method as claimed in any one of the preceding claims of producing a timepiece assembly, wherein the timepiece assembly (3) comprises the second timepiece component (2) and at least one third timepiece component assembled to the first timepiece component (1) or the second timepiece component (2) comprises a plurality of conformations (20) cooperating with respective openings (10) in the first timepiece component.

11. The method as claimed in any one of the preceding claims of producing a timepiece assembly, wherein the step consisting in subjecting said timepiece assembly (3) to a heat treatment of joining together leads to clamping the at least one opening (10) of the first timepiece component (1) by shrinking it onto the at least one conformation (20) of the second timepiece component (2) and/or clamping the at least one opening (10) in the first timepiece component (1) onto the at least one conformation (20) of the second timepiece component (2) by enlarging said conformation (20) and joining together of the two timepiece components (1, 2) or the step consisting in subjecting said timepiece assembly (3) to a heat treatment of joining together leads to trapping the at least one conformation (20) of the second timepiece component (2) in a housing delimited by the at least one opening (10) in the first timepiece component (1), the two timepiece components (1, 2) being joint together in a manner mobile relative to one another.

12. A timepiece assembly comprising a first timepiece component (1) and at least one distinct second timepiece component (2) comprising at least one conformation (20), the first timepiece component (1) and the second timepiece component (2) being clamped without deformation of the opening in the first timepiece component (1) on the at least one conformation (20) of the second timepiece component (2), **characterized in that** said first timepiece component (1) comprises a connecting portion based on a tetragonal phase zirconia comprising at least one opening (10), or **in that** said at least one second timepiece component (2) comprises at least one conformation based on a monoclinic phase zirconia.

13. A timepiece assembly comprising a first timepiece component (1) comprising a connecting portion based on a tetragonal phase zirconia comprising at least one opening (10) and at least one distinct second timepiece component (2) comprising at least one conformation (20) or comprising a first timepiece component (1) comprising a connecting portion comprising at least one opening (10) and at least one distinct second timepiece component (2) comprising at least one conformation (20) based on a monoclinic phase zirconia, the first timepiece component (1) and the second timepiece component (2) being joint together in a mobile manner relative to one another by positioning the at least one conformation (20) of the second timepiece component (2) in a housing delimited by the at least one opening (10) in the first timepiece component (1).

14. The timepiece assembly as claimed in claim 12 or 13, wherein the connecting portion of the first timepiece component is based on a tetragonal phase zirconia adapted to change phase to a monoclinic phase at a temperature of 100 degrees Celsius or even between 100 and 400 degrees Celsius at ambient pressure or even at a pressure below 2 atm.

15. The timepiece assembly as claimed in any one of claims 12 to 14, wherein one of the two timepiece components of the timepiece assembly comprises a part based on a tetragonal or monoclinic zirconia and the other of the two timepiece components of the timepiece assembly is in whole or in part based on a technical ceramic having a negligible change in dimensions compared to the change in dimensions of the at least one part based on a tetragonal or monoclinic zirconia during a heat treatment of joning together, such as a zirconia different from that of said part based on a tetragonal or monoclinic zirconia, alumina (Al2O3), boron nitride (BN), boron carbide (B4C), silicon nitride (Si3N4), silicon carbide (SiC), aluminum nitride (AIN), borides and nitrides of Ti, Zr and Hf, or sapphire, or ruby or crystalline quartz or the at least one conformation (20) of the second timepiece component (2) is made of a refractory material such as a metal, a cermet or a glass, such as a molten quartz glass.

16. The timepiece assembly as claimed in any one of claims 12 to 15, wherein the at least one conformation (20) of the second timepiece component (2) is a protrusion or a peg or a portion of the body of the second timepiece component (2) or the first timepiece component (1) is a bezel or a bezel ring and the second timepiece component (2) is a bezel disc or the first timepiece component (1) is a bezel disc, a bezel, a dial, or a wristband and the second timepiece component (2) is an external part, such as an applique, or wherein the first timepiece component (1) is a pinion, such as an escapement pinion, a lever, a cam, a ruby, or a toothed component, and the second timepiece component (2) is an arbor or the first timepiece component (1) is an arbor and the second timepiece component (2) is a pinion, a lever, a cam, or a toothed component.

17. A timepiece comprising a timepiece assembly as claimed in any one of claims 12 to 16.
